# FASCICULE DE BREVET EUROPEEN

(11) **EP 2 399 697 B1**
(45) Date de publication et mention de la délivrance du brevet: **20.01.2021**
(21) Numéro de dépôt: 11305810.1
(22) Date de dépôt: 24.06.2011
(51) Int. Cl.: B23B 27/00, B23B 29/02, B23B 31/117, B23C 5/00, B23Q 11/10

(54) **Dispositif d'amortissement et porte-outil tel que tête à aléser, mandrin à pince ou porte-fraise**
Dämpfungsvorrichtung und Werkzeugträger wie Ausbohrkopf, Zangenfutter oder Fräsenhalter
Damping device and tool holder such as a boring head, collet chuck or milling spindle

(30) Priorité: 28.06.2010 FR 1055168
(43) Date de publication de la demande: 28.12.2011
(73) Titulaire: SECO-E.P.B. (Société par Actions Simplifiée), 67330 Bouxwiller (FR)
(72) Inventeur: Freyermuth, Alain, 67350 PFAFFENHOFFEN (FR); Ostermann, Matthieu, 67310 ALLENWILLER (FR); Roos, Cédric, 67330 NEUWILLER LES SAVERNE (FR)
(74) Mandataire: Cabinet Nuss

(56) Documents cités:
- FR-A1- 2 239 313
- GB-A- 1 578 343
- US-A- 5 700 116
- US-A1- 2006 230 890

## Description

La présente invention concerne le domaine des accessoires des machines-outils, à commande numérique, centres d'usinage, cellules et ateliers flexibles et a pour objet un dispositif d'amortissement pour porte-outils, tel que tête à aléser, mandrin à pince ou porte-fraise.

Les porte-outils ont tendance, du fait même de leur constitution, à vibrer, ce qui est préjudiciable à leur bon fonctionnement. Cette tendance à vibrer est d'autant plus importante que les vitesses de travail des machines-outils actuelles sont en constante augmentation.

Pour obvier à ces inconvénients il a été proposé de munir les porte-outils d'un dispositif d'amortissement des oscillations permettant une adaptation de leur rigidité aux conditions de travail.

A cet effet, on connaît actuellement, notamment par US-A-3 447 402, un tel dispositif qui consiste essentiellement en une masse d'amortissement montée dans un logement axial et maintenu dans ce dernier par serrage entre des masses élastiquement déformables, le réglage de la raideur étant réalisé par l'intermédiaire d'un moyen de butée chargé par ressort, le tarage de ce ressort pouvant lui-même être réglé par l'intermédiaire d'un dispositif à vis.

Par ailleurs, on connaît, par FR-A-2 173 957, un amortisseur réglable pour machines-outils qui est constitué par un organe d'amortissement placé dans un trou axial d'un arbre porte-outils et relié à cet arbre par l'intermédiaire d'éléments élastiques annulaires, montés sur des extrémités coniques de l'organe d'amortissement et pouvant être comprimés sur lesdites extrémités, afin de régler la rigidité.

EP-A-0 571 490 décrit un autre dispositif d'amortissement, qui est constitué par un support cylindrique central, logé dans le corps du porte-outils et sur lequel est monté un corps amortisseur. Ce corps amortisseur est relié au support cylindrique central par l'intermédiaire d'éléments élastiques disposés dans les extrémités du corps amortisseurs et retenus par l'intermédiaire de rondelles reliés au support central. Un dispositif similaire est décrit dans EP-A-1 248 692.

Dans tous ces dispositifs connus, le maintien de l'organe d'amortissement dans le trou axial est effectué par action sur les extrémités de l'organe par l'intermédiaire d'éléments élastiquement déformables, ce, toutefois uniquement par action auxdites extrémités, sans contact desdits éléments élastiquement déformables avec la génératrice de l'organe d'amortissement (US-A-3 447 402 et FR-A-2 173 957). Les deux documents décrivant l'utilisation d'un support cylindrique central ne prévoient pas non plus de contact de la génératrice de l'organe d'amortissement avec un élément élastiquement déformable qui serait en contact, par ailleurs, avec le logement de l'organe amortisseur.

Il en résulte que l'action sur la rigidité d'un arbre équipé d'un tel organe d'amortissement est uniquement possible par les extrémités, de sorte que l'amortissement s'effectue davantage de manière axiale et ne peut donc pas être optimal.

US 5,700,116 A divulgue un dispositif d'amortissement selon le préambule de la revendication 1.

Il a également été proposé , par FR-A-2 929 868, un porte-outils pourvu d'un moyen d'amortissement sous forme d'un corps allongé disposé dans un logement d'extrémité du porte-outils, de forme et de dimension correspondantes, et fermé à son extrémité par un corps de réception d'une tête à aléser ou par un élément porte-fraise, dans lequel le moyen d'amortissement est de type uniquement à absorption radiale et est pourvu d'au moins un moyen élastiquement déformable, au moins près de chaque extrémité, lesdits moyens élastiquement déformables s'étendant entre l'enveloppe du moyen d'amortissement et la paroi du logement du porte-outils en étant serrés entre la paroi du logement et le moyen d'amortissement, les extrémités du moyen d'amortissement s'étendant dans le logement sans contrainte.

Le moyen d'amortissement selon cette dernière demande, dont le déplacement s'effectue exclusivement dans le sens radial, permet d'annihiler les effets vibratoires dus aux efforts de coupe et aux vitesses d'usinage, tout en étant de conception et de mise en œuvre simples. En outre, ce moyen d'amortissement ne nécessite aucun élément complémentaire ni procédé de réglage spécifiques et peut être mis en œuvre sur tous types de porte-outils.

Cependant, dans le cas de mise en œuvre de porte-outils présentant une grande longueur en regard de leur diamètre et portant un outil de faible diamètre, il se pose un problème de positionnement du moyen d'amortissement le plus près possible de l'outil de coupe, ce dernier nécessitant généralement d'être monté à l'extrémité d'un tel porte-outils de faible diamètre. En effet, dans un tel cas, le moyen d'amortissement mis en œuvre de manière habituelle est positionné à une distance relativement importante du plan de la partie active de l'outil, du fait d'une impossibilité de montage au niveau de l'outil, de sorte que son efficacité est nettement moindre qu'en utilisation avec un porte-outils standard.

De plus, les outils de faible diamètre, montés sur ces porte-outils sont généralement fixés par frettage, c'est-à-dire par chauffage préalable, de sorte qu'il se pose un problème de transmission de la chaleur à des éléments en amont et notamment au moyen d'amortissement, qui présente des parties sensibles à des températures élevées et qui peuvent donc se dégrader, rendant ainsi le moyen d'amortissement inopérant.

La présente invention a pour but de pallier ces inconvénients en proposant un dispositif d'amortissement pour porte-outils, tel que tête à aléser, mandrin à pince ou porte-fraise, permettant d'annihiler les effets vibratoires dus aux efforts de coupe et aux vitesses d'usinage, au plus près des outils de coupe, et adaptable à des porte-outils de longueurs différentes. En outre, ce dispositif d'amortissement peut être muni d'un dispositif de protection contre une température excessive.

A cet effet, le dispositif d'amortissement pour porte-outils, tel que tête à aléser, mandrin à pince ou porte-fraise, selon l'invention comprend les caractéristiques de la revendication indépendante Des modes de réalisations préférables sont donnés dans les revendications dépendantes.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
la figure 1 est une vue en coupe d'un porte-outils pourvu d'un dispositif d'amortissement conforme à l'invention ;
la figure 2 est une vue partielle en coupe et à plus grande échelle du dispositif d'amortissement ;
la figure 3 est une vue analogue à celle de la figure 2 d'une première variante de réalisation de l'invention le dispositif d'amortissement étant pourvu d'un embout de montage par frettage;
la figure 4 est une vue analogue à celle de la figure 3, mais non conforme à l'invention, le dispositif d'amortissement étant pourvu, en outre, d'un dispositif de prévention contre un échauffement excessif ;
la figure 5 est une vue analogue à celles des figures 3 et 4 représentant une variante de réalisation non conforme à l'invention du dispositif d'amortissement de la figure 4, et
les figures 6 et 7 sont des vues analogues à celles des figures 3 à 5 d'une autre variante de réalisation non conforme à l'invention du dispositif d'amortissement de la figure 4, respectivement en position de service après frettage d'un outil et en position de prévention contre un échauffement excessif lors du frettage.

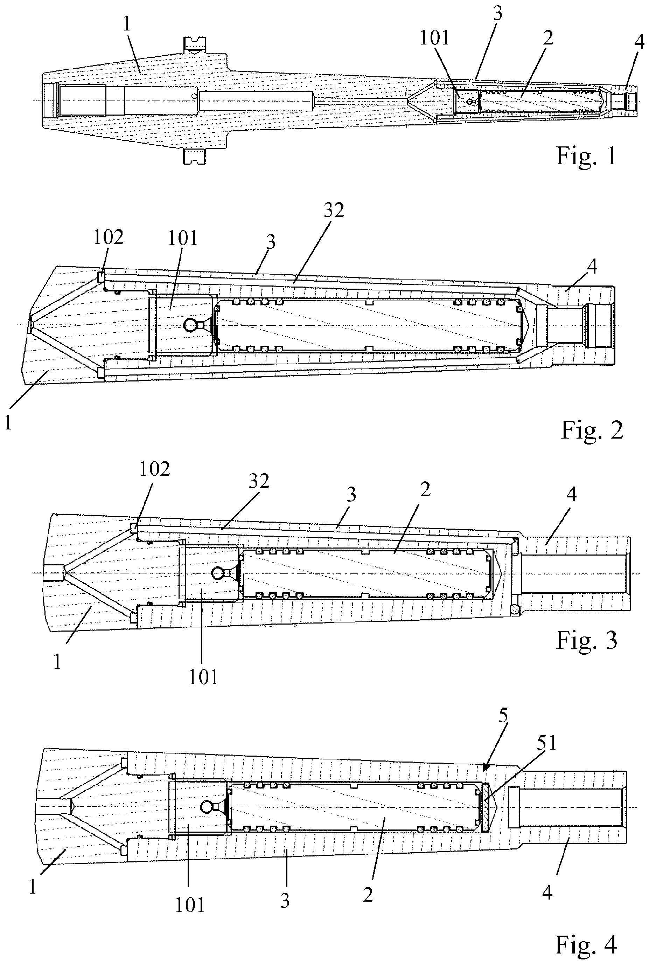

Les figures 1 à 7 des dessins annexés représentent, à titre d'exemples, un porte-outils sous forme de tête à aléser 1, qui est pourvu d'un moyen d'amortissement 2 sous forme d'un corps allongé.

Conformément à l'invention, le moyen d'amortissement 2 est logé dans un corps de montage 3, rapporté par une extrémité sur le corps 1 de porte-outils et présentant à son autre extrémité un embout 4 de montage d'un outil.

Comme le montrent les figures des dessins annexés, le corps de montage 3 présente un logement 31 de réception du moyen d'amortissement 2 et est rapporté sur l'extrémité avant du corps 1 du porte-outils par vissage ou par emmanchement à force sur un embout 101 de ce dernier. De préférence, le corps de montage 3 se présente sous forme d'un réceptacle à parois de faible épaisseur. Ainsi, le corps de montage 3 permet une adaptation à un faible diamètre d'outils et donc, notamment, une possibilité de mise en œuvre d'un outil de faible diamètre en extrémité d'un porte-outils de grande longueur, par exemple pour la réalisation d'alésages de faible diamètre et de longueur importante.

Dans les porte-outils représentés aux figures 1 à 7, la fermeture du logement 31 du moyen d'amortissement 2 est réalisée par vissage direct ou par emmanchement à force de l'embout 101 dans l'extrémité du logement 31.

Cependant, il est également possible, conformément à une variante de réalisation de l'invention non représentée aux dessins annexés, de monter le moyen d'amortissement 2 à travers l'embout 4 de montage d'un outil, le logement 31 étant alors fermé par un bouchon inséré dans ledit embout 4.

Par ailleurs, comme le montrent les figures 1 à 3 des dessins annexés, le corps de montage 3 est muni d'au moins un conduit 32 d'alimentation en lubrifiant, débouchant à son extrémité avant dans l'embout 4 de montage d'un outil et connecté à son autre extrémité à une gorge circulaire 102 de distribution de lubrifiant prévue sur la face avant du porte-outils 1.

Grâce au corps de montage 3, il est possible de réaliser des porte-outils longs, de faible diamètre par rapport à leur longueur et permettant le montage d'outils d'alésage ou de fraisage de faible diamètre, tout en assurant une suppression des effets vibratoires dus aux efforts de coupe et aux vitesses d'usinage, au plus près des outils de coupe. En effet, l'amortissement est effectué par l'intermédiaire du corps de montage qui est adaptable sur des porte-outils différents et qui reçoit directement l'outil de coupe sur son embout de montage 4.

Selon une autre caractéristique préférable de l'invention, dans le cas de mise en œuvre d'un embout 4 de montage d'un outil par frettage, le corps de montage 3 peut avantageusement être muni, en outre, d'un dispositif 5 de prévention contre un échauffement excessif du moyen d'amortissement 2 (figures 4 à 7).

Selon un premier exemple, représenté à la figure 4 des dessins annexés, le dispositif 5 de prévention contre un échauffement excessif du moyen d'amortissement 2 est avantageusement constitué par un tampon isolant thermique 51 s'étendant devant l'extrémité du moyen d'amortissement 2 du côté de ce dernier situé près de l'embout de montage 4. Un tel tampon isolant thermique 51 peut être constitué en tout matériau présentant un coefficient élevé d'isolation, à savoir, par exemple, à base de fibres de verre noyées dans une résine ou encore à base de mica et de résine. Ainsi, lors du chauffage, en vue du frettage de l'outil préalablement centré sur l'embout de montage 4, une part relativement importante de la chaleur dégagée est transmise audit embout de montage 4 et par ce dernier à l'ensemble du corps de montage 3, de sorte qu'il se produit également un échauffement du logement 31 du moyen d'amortissement 2.

La prévision du tampon isolant thermique 51 formant le dispositif 5 permet d'isoler ledit logement 31 contre la chaleur provenant directement de l'embout de montage 4 et plus particulièrement de la chaleur sous forme d'air très chaud se trouvant dans le perçage central 41 dudit embout de montage 4.

Il s'ensuit que les éléments du moyen d'amortissement 2, à savoir les parties élastiquement déformables servant à l'amortissement sont protégées contre un échauffement trop important.

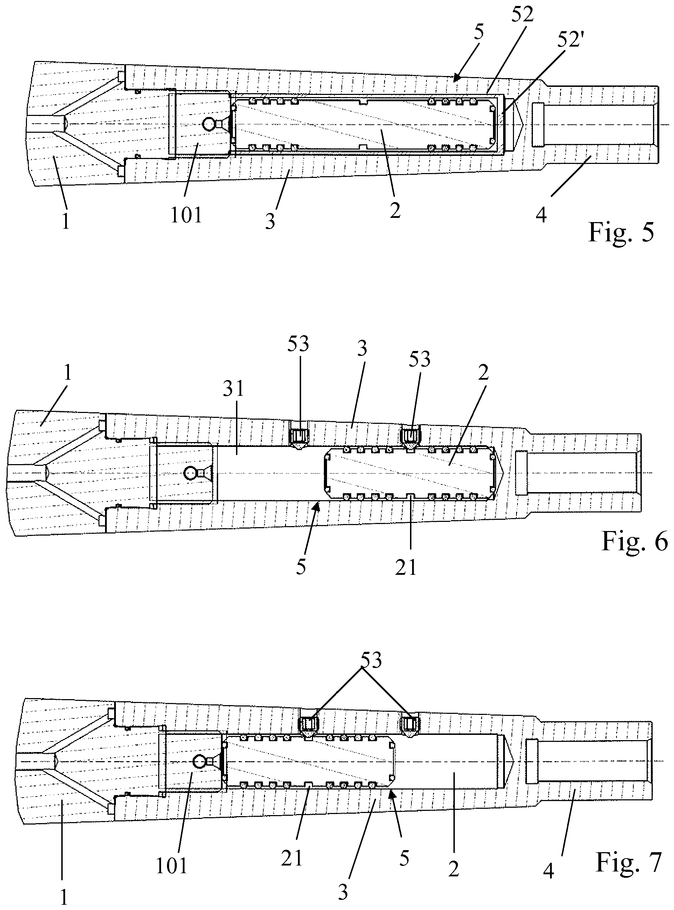

La figure 5 des dessins annexés représente une variante de réalisation, dans laquelle le dispositif 5 de prévention contre un échauffement excessif du moyen d'amortissement 2 est constitué par un réceptacle 52 de logement du moyen d'amortissement 2, ce réceptacle étant inséré dans le logement 31 du porte-outils 1 et étant fermé par une paroi 52' au moins sur son côté tourné vers l'embout de montage 4.

Dans cette variante, le réceptacle 52 est également avantageusement réalisé en un matériau à haut pouvoir d'isolation thermique.

Les figures 6 et 7 des dessins annexés représentent une deuxième variante de réalisation, dans laquelle le dispositif 5 de prévention contre un échauffement excessif du moyen d'amortissement 2 consiste essentiellement en la prévision d'un logement 31 du moyen d'amortissement 2 de longueur supérieure à la longueur dudit moyen d'amortissement 2, la prévention contre un échauffement excessif étant réalisée par un déplacement du moyen d'amortissement 2 d'une position de service (figure 6), dans laquelle le moyen d'amortissement 2 est placé et est maintenu à une extrémité du logement 31, au plus près de l'embout de montage 4, vers une position de prévention contre l'échauffement, dans laquelle le moyen d'amortissement 2 est placé et est maintenu à l'extrémité opposée du logement 31.

Le maintien du moyen d'amortissement 2 dans ses deux positions extrêmes peut être assuré par l'intermédiaire de deux vis de pression 53 coopérant, chacune dans l'une des positions du moyen d'amortissement 2, avec une gorge médiane circulaire 21 dudit moyen d'amortissement 2.

Ce maintien du moyen d'amortissement 2 dans ses deux positions extrêmes peut également être assuré par un dispositif à deux billes éclipsables coopérant, chacune dans l'une des positions du moyen d'amortissement 2, avec la gorge médiane circulaire 21 dudit moyen d'amortissement 2. Un tel dispositif n'est pas représenté aux dessins annexés, sa conception étant parfaitement accessible à l'homme du métier.

Grâce à l'invention, il est possible de réaliser un dispositif d'amortissement pour porte-outils, tel que tête à aléser, mandrin à pince ou porte-fraise, pouvant être mis en œuvre sur tous types de porte-outils, en particulier des porte-outils longs, de faible diamètre par rapport à leur longueur, et permettant le montage d'outils d'alésage ou de fraisage de faible diamètre, par frettage, tout en préservant les parties fragiles du moyen d'amortissement 2, en particulier les éléments élastiquement déformables, contre une détérioration due à la chaleur dégagée lors du frettage.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention tel que défini par les revendications.

## Revendications

1. Dispositif d'amortissement comprenant un moyen d'amortissement (2), sous forme d'un corps allongé, le dispositif d'amortissement comprenant en outre un corps de montage (3) dans lequel le moyen d'amortissement (2) est logé ; le corps de montage (3) ayant une extrémité pour rapporter le corps de montage (3) sur le corps (1) d'un porte-outil, le corps de montage (3) ayant à son autre extrémité un embout (4) pour le montage d'un outil, dispositif **caractérisé en ce que** le corps de montage (3) est muni d'au moins un conduit (32) d'alimentation débouchant à son extrémité avant dans l'embout (4) de montage d'un outil, le corps de montage (3) étant arrangé de sorte que le conduit d'alimentation (32) à son autre extrémité est en communication avec une gorge circulaire (102) pour la distribution de lubrifiant prévue sur la face avant du porte-outil (1) lorsque le corps de montage (3) est monté sur le corps (1) du porte-outil.

2. Dispositif d'amortissement selon la revendication 1, **caractérisé en ce que** le corps de montage (3) présente un logement (31) de réception du moyen d'amortissement (2) et est rapporté sur l'extrémité avant du corps du porte-outils (1) par vissage ou par emmanchement à force sur un embout (101) de ce dernier.

3. Dispositif d'amortissement selon l'une quelconque des revendications 1 et 2, **caractérisé en ce que** le corps de montage (3) se présente sous forme d'un réceptacle à parois de faible épaisseur.

4. Dispositif d'amortissement selon la revendication 2, **caractérisé en ce que** la fermeture du logement (31) du moyen d'amortissement (2) est réalisée par vissage direct ou par emmanchement à force de l'embout (101) dans l'extrémité du logement (31).

5. Dispositif d'amortissement selon la revendication 2, **caractérisé en ce que** le moyen d'amortissement (2) est monté à travers l'embout (4) de montage d'un outil dans le logement (31) qui est fermé par un bouchon inséré dans ledit embout (4).

6. Dispositif d'amortissement selon l'une quelconque des revendications 1 à 5, **caractérisé en ce que**, dans le cas de mise en oeuvre d'un embout (4) de montage d'un outil par frettage, le corps de montage (3) est muni, en outre, d'un dispositif (5) de prévention contre un échauffement excessif du moyen d'amortissement (2).

7. Dispositif d'amortissement selon la revendication 6, **caractérisé en ce que** le dispositif (5) de prévention contre un échauffement excessif du moyen d'amortissement (2) est constitué par un tampon isolant thermique (51) s'étendant devant l'extrémité du moyen d'amortissement (2) du côté de ce dernier situé près de l'embout de montage (4).

8. Dispositif d'amortissement selon la revendication 6, **caractérisé en ce que** le dispositif (5) de prévention contre un échauffement excessif du moyen d'amortissement (2) est constitué par un réceptacle (52) de logement du moyen d'amortissement (2), ce réceptacle étant inséré dans le logement (31) du porte-outils (1) et étant fermé par une paroi (52') au moins sur son côté tourné vers l'embout de montage (4).

9. Dispositif d'amortissement selon la revendication 6, **caractérisé en ce que** le dispositif (5) de prévention contre un échauffement excessif du moyen d'amortissement (2) consiste essentiellement en la prévision d'un logement (31) du moyen d'amortissement (2) de longueur supérieure à la longueur dudit moyen d'amortissement (2), la prévention contre un échauffement excessif étant réalisée par un déplacement du moyen d'amortissement (2) d'une position de service, dans laquelle le moyen d'amortissement (2) est placé et est maintenu à une extrémité du logement (31), au plus près de l'embout de montage (4), vers une position de prévention contre l'échauffement, dans laquelle le moyen d'amortissement (2) est placé et est maintenu à l'extrémité opposée du logement (31).

10. Dispositif d'amortissement selon la revendication 9, **caractérisé en ce que** le maintien du moyen d'amortissement (2) dans ses deux positions extrêmes est assuré par l'intermédiaire de deux vis de pression (53) coopérant, chacune dans l'une des positions du moyen d'amortissement (2), avec une gorge médiane circulaire (21) dudit moyen d'amortissement (2).

11. Dispositif d'amortissement selon la revendication 9, **caractérisé en ce que** le maintien du moyen d'amortissement (2) dans ses deux positions extrêmes est assuré par un dispositif à deux billes éclipsables coopérant, chacune dans l'une des positions du moyen d'amortissement (2), avec une gorge médiane circulaire (21) dudit moyen d'amortissement (2).

12. Porte-outil, tel que tête à aléser, mandrin à pince ou porte-fraise associé à un dispositif d'amortissement selon une des revendications 1 à 11.

## Patentansprüche

1. Dämpfungsvorrichtung, umfassend ein Dämpfungsmittel (2) in Form eines länglichen Körpers, wobei die Dämpfungsvorrichtung ferner einen Montagekörper (3) umfasst, in dem das Dämpfungsmittel (2) untergebracht ist; wobei der Montagekörper (3) ein Ende zum Anbringen des Montagekörpers (3) am Körper (1) eines Werkzeugträgers aufweist, wobei der Montagekörper (3) an seinem anderen Ende einen Stutzen (4) zur Montage eines Werkzeugs aufweist, wobei die Vorrichtung **dadurch gekennzeichnet ist, dass** der Montagekörper (3) mit zumindest einer Versorgungsleitung (32) versehen ist die an ihrem vorderen Ende im Montagestutzen (4) eines Werkzeugs endet, wobei der Montagekörper (3) so angeordnet ist, dass die Versorgungsleitung (32) an ihrem anderen Ende mit einer kreisförmigen Nut (102) zur Verteilung von Schmiermittel in Verbindung steht, die an der Vorderseite des Werkzeugträgers (1) vorgesehen ist, wenn der Montagekörper (3) am Körper (1) des Werkzeugträgers montiert ist.

2. Dämpfungsvorrichtung nach Anspruch 1, **dadurch gekennzeichnet, dass** der Montagekörper (3) ein Gehäuse (31) zur Aufnahme des Dämpfungsmittels (2) aufweist und am vorderen Ende des Körpers des Werkzeugträgers (1) durch Aufschrauben oder durch Aufpressen auf ein Endstück (101) desselben angebracht ist.

3. Dämpfungsvorrichtung nach einem der Ansprüche 1 und 2, **dadurch gekennzeichnet, dass** der Montagekörper (3) die Form eines dünnwandigen Behälters aufweist.

4. Dämpfungsvorrichtung nach Anspruch 2, **dadurch gekennzeichnet, dass** der Gehäuse (31) des Dämpfungsmittels (2) durch direktes Einschrauben oder durch Einpressen des Endstücks (101) in das Ende des Gehäuses (31) verschlossen wird.

5. Dämpfungsvorrichtung nach Anspruch 2, **dadurch gekennzeichnet, dass** das Dämpfungsmittel (2) über den Montagestutzen (4) eines Werkzeugs im Gehäuse (31) montiert ist, der durch einen in das Endstück (4) eingeführten Stopfen verschlossen ist.

6. Dämpfungsvorrichtung nach einem der Ansprüche 1 bis 5, **dadurch gekennzeichnet, dass** bei Verwendung eines Stutzens (4) zur Montage eines Werkzeugs durch Aufschrumpfen der Montagekörper (3) ferner mit einer Vorrichtung (5) zur Verhinderung einer Überhitzung des Dämpfungsmittels (2) versehen ist.

7. Dämpfungsvorrichtung nach Anspruch 6, **dadurch gekennzeichnet, dass** die Vorrichtung (5) zur Verhinderung einer Überhitzung des Dämpfungsmittels (2) aus einem thermisch isolierenden Kissen (51) gebildet ist, das sich vor dem Ende des Dämpfungsmittels (2) auf der Seite desselben nahe dem Montagestutzen (4) befindet.

8. Dämpfungsvorrichtung nach Anspruch 6, **dadurch gekennzeichnet, dass** die Vorrichtung (5) zur Verhinderung einer Überhitzung des Dämpfungsmittels (2) aus einem Behälter (52) zur Aufnahme des Dämpfungsmittels (2) gebildet ist, wobei dieser Behälter in das Gehäuse (31) des Werkzeugträgers (1) eingeführt und zumindest auf seiner dem Montagestutzen (4) zugewandten Seite durch eine Wand (52') verschlossen ist.

9. Dämpfungsvorrichtung nach Anspruch 6, **dadurch gekennzeichnet, dass** die Vorrichtung (5) zur Verhinderung einer Überhitzung des Dämpfungsmittels (2) im Wesentlichen aus der Bereitstellung eines Gehäuses (31) des Dämpfungsmittels (2) besteht, dessen Länge größer als die Länge des Dämpfungsmittels (2) ist, wobei die Verhinderung einer Überhitzung durch eine Verschiebung des Dämpfungsmittels (2) aus einer Betriebsposition, in der das Dämpfungsmittel (2) an einem Ende des Gehäuses (31) angeordnet ist und gehalten wird, das dem Montagestutzen (4) am nächsten liegt, in eine Erwärmungsverhinderungsposition, in der das Dämpfungsmittel (2) am gegenüberliegenden Ende des Gehäuses (31) angeordnet ist und gehalten wird, erfolgt.

10. Dämpfungsvorrichtung nach Anspruch 9, **dadurch gekennzeichnet, dass** das Halten des Dämpfungsmittels (2) in seinen beiden Extrempositionen mittels zweier Druckschrauben (53) erfolgt, die jeweils in einer der Positionen des Dämpfungsmittels (2) mit einer kreisförmigen mittigen Nut (21) des Dämpfungsmittels (2) zusammenwirken.

11. Dämpfungsvorrichtung nach Anspruch 9, **dadurch gekennzeichnet, dass** das Halten des Dämpfungsmittels (2) in seinen beiden Extrempositionen durch eine Vorrichtung mit zwei einrastbaren Kugeln erfolgt, die jeweils in einer der Positionen des Dämpfungsmittels (2) mit einer kreisförmigen mittleren Nut (21) des Dämpfungsmittels (2) zusammenwirken.

12. Werkzeugträger wie Ausbohrkopf, Zangenfutter oder Fräserhalter in Verbindung mit einer Dämpfungsvorrichtung nach einem der Ansprüche 1 bis 11.

## Claims

1. Damping device comprising a damping means (2) in the form of an elongate body, the damping device further comprising a mounting body (3) in which the damping means (2) is accommodated; the mounting body (3) having an end for attaching the mounting body (3) to the body (1) of a tool holder, the mounting body (3) having at its other end an end piece (4) for mounting a tool, this device being **characterized in that** the mounting body (3) is provided with at least one supply duct (32) that opens at its front end into the end piece (4) for mounting a tool, the mounting body (3) being arranged in such a way that the supply duct (32), at its other end, communicates with a circular lubricant distribution channel (102) provided on the front face of the tool holder (1) when the mounting body (3) is mounted on the body (1) of the tool holder.

2. Damping device according to Claim 1, **characterized in that** the mounting body (3) has a recess (31) for receiving the damping means (2) and is attached to the front end of the body of the tool holder (1) by screwing or by press-fitting onto an end piece (101) of the latter.

3. Damping device according to either one of Claims 1 and 2, **characterized in that** the mounting body (3) is in the form of a thin-walled receptacle.

4. Damping device according to Claim 2, **characterized in that** the recess (31) of the damping means (2) is closed by screwing or by press-fitting the end piece (101) into the end of the recess (31).

5. Damping device according to Claim 2, **characterized in that** the damping means (2) is mounted via the end piece (4) for mounting a tool in the recess (31) which is closed by a stopper inserted into said end piece (4).

6. Damping device according to any one of Claims 1 to 5, **characterized in that**, in the case of implementing an end piece (4) for mounting a tool by shrink-fitting, the mounting body (3) is further provided with a device (5) for preventing excessive heating of the damping means (2).

7. Damping device according to Claim 6, **characterized in that** the device (5) for preventing excessive heating of the damping means (2) consists of a thermally insulating buffer (51) extending in front of the end of the damping means (2), on that side of the latter located close to the mounting end piece (4).

8. Damping device according to Claim 6, **characterized in that** the device (5) for preventing excessive heating of the damping means (2) consists of a receptacle (52) for accommodating the damping means (2), this receptacle being inserted into the recess (31) of the tool holder (1) and being formed by a wall (52'), at least on its side oriented towards the mounting end piece (4).

9. Damping device according to Claim 6, **characterized in that** the device (5) for preventing excessive heating of the damping means (2) consists essentially in the provision of a recess (31) of the damping means (2) which is longer than the length of said damping means (2), the prevention of excessive heating being insured by the damping means (2) being moved from a service position, in which the damping means (2) is placed and is held at an end of the recess (31) closest to the mounting end piece (4), to a heating prevention position, in which the damping means (2) is placed and held at the opposite end of the recess (31).

10. Damping device according to Claim 9, **characterized in that** the damping means (2) is held in its two extreme positions by means of two set screws (53) each cooperating, in one of the positions of the damping means (2), with a circular median channel (21) of said damping means (2).

11. Damping device according to Claim 9, **characterized in that** the damping means (2) is held in its two extreme positions by means of a device having two retractable balls each cooperating, in one of the positions of the damping means (2), with a circular median channel (21) of said damping means (2).

12. Tool holder, such as a boring head, collet chuck or milling spindle, associated with a damping device according to one of Claims 1 to 11.
